# EUROPÄISCHE PATENTSCHRIFT

(11) **EP 3 592 494 B1**
(45) Veröffentlichungstag und Bekanntmachung des Hinweises auf die Patenterteilung: **26.06.2024**
(21) Anmeldenummer: 17714650.3
(22) Anmeldetag: 09.03.2017
(51) Int. Cl.: B21D 53/16, B23K 26/26, B23K 9/02, B23K 9/18, B23K 26/06, B23K 33/00, B23K 26/262

(54) **VERFAHREN ZUM HERSTELLEN EINES GESCHWEISSTEN RINGS**
METHOD OF PRODUCING A WELDED RING
PROCÉDÉ DE PRODUCTION D'UNE BAGUE SOUDÉE

(43) Veröffentlichungstag der Anmeldung: 15.01.2020
(73) Patentinhaber: Oetiker Schweiz AG, 8810 Horgen (CH)
(72) Erfinder: MIESSMER, Stefan, 8004 Zürich (CH); VETTER, Andreas, 8808 Pfäffikon (CH)
(74) Vertreter: Strehl Schübel-Hopf & Partner
(86) Internationale Anmeldenummer: PCT/EP2017/055542
(87) Internationale Veröffentlichungsnummer: WO 2018/162063

(56) Entgegenhaltungen:
- EP-A1- 2 889 104
- WO-A1-2017/148548
- CN-A- 103 707 002
- DE-A1-102011 101 043
- US-A1- 2012 061 076

## Beschreibung

### Stand der Technik

Ringe, sogenannte Multi-Crimp-Ringe, werden in unterschiedlichen Ausführungen hergestellt. In einem bekannten Verfahren wird ein axial oder längs einer Schraubenlinie geschweißtes Rohr in Ringe gewünschter Breite zerteilt, die anschließend entgratet werden. Nachteilig bei diesem Verfahren sind die aus Kostengründen benötigten hohen Mindestproduktionsmengen, die dementsprechend geringe Flexibilität bei unterschiedlichen Durchmessern und die hohen Lagerhaltungskosten der Rohlings-Rohre.

Bei einem alternativen Herstellverfahren werden von einem entsprechend der gewünschten Ringbreite gespaltenen und entgrateten Band dem Ringumfang entsprechende Längen gerade oder schräg abgeschnitten, gebogen, und an ihren Enden verschweißt.

Beim Verschweißen der Bandenden lässt sich beim Einfahren des Schweißvorgangs eine mit der Ringkante im Wesentlichen bündige Schweißung erzielen. Demgegenüber entsteht beim Schweißaustritt an der anderen Ringkante eine mit der Kante unbündige Geometrie.

Aus EP 1 752 247 A1 ist es bekannt, beim Stumpfschweißen eines auf Biegung beanspruchten Werkstücks die Schweißnaht in zwei Teilnähten auszuführen, die an den äußeren Enden beginnend im mittleren Bereich einander überlappen, um Kerben am Außenrand des Werkstücks zu vermeiden. Aus der EP 889 104 A1 ist ein Verfahren gemäß dem Oberbegriff des Anspruchs 1 bekannt,

### Abriss der Erfindung

Der Erfindung liegt die generelle Aufgabe zugrunde, Nachteile, wie sie bei vergleichbaren Verfahren zum Herstellen eines geschweißten Rings auftreten, mindestens teilweise zu beseitigen. Eine speziellere Aufgabe der Erfindung kann darin gesehen werden, ein Verfahren anzugeben, mit dem sich geschweißte Ringe mit verbesserter Schweißnaht herstellen lassen.

Die Lösung dieser Aufgabe gelingt durch das Verfahren gemäß dem Anspruch 1 und dadurch, dass an den miteinander zu verschweißenden Bandenden ein in der Bandebene liegender Versatz in Umfangsrichtung des Rings vorgesehen ist und die Schweißung von beiden Ringseitenkanten bzw. den Bandkanten her von außen nach innen bis zu dem Versatz erfolgt. Dabei findet an beiden Ringkanten eine bündige Schweißung statt. Der Versatz bewirkt, dass in der Bandmitte der Effekt des Wegfließens der Schmelze bei der Überlappung der beiden Schweißnähte reduziert. Daraus resultiert eine leistungstechnische Verbesserung, insbesondere eine höhere Schweißgüte im Überlappungsbereich und eine höhere Zugfestigkeit.

### Zeichnungen

Ausführungsbeispiele der Erfindung werden nachstehend anhand der Zeichnungen näher erläutert. Darin zeigen:
Fig. 1 einen geschweißten Ring,
Fig. 2 eine vergrößerte Darstellung der Stoßstelle des Rings vor dem Verschweißen,
Fig. 3 vergrößerte Darstellung der Stoßstelle des Rings nach dem Verschweißen,
Fig. 4 und 5 ähnliche Darstellungen wie Fig. 2 und 3 mit nicht erfindungsgemäßer alternativer Gestaltung der Stoßstelle, und
Fig. 6 und 7 ähnliche Darstellungen mit wieder anders nicht erfindungsgemäßer gestalteter Stoßstelle.

### Ausführungsbeispiele

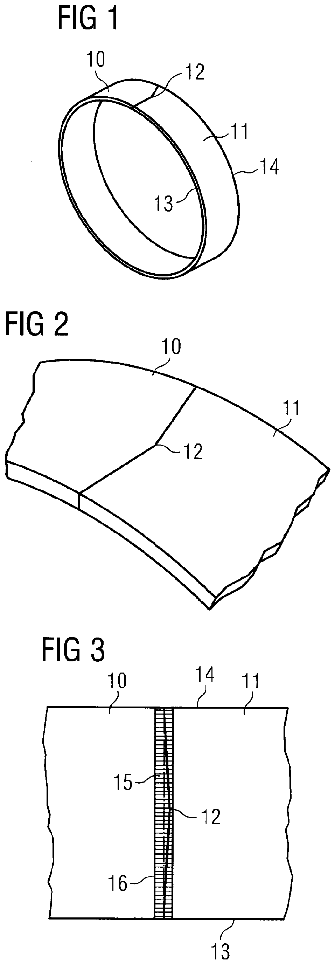

In Fig. 1 bis 3 ist die Stoßstelle, an der die beiden Bandenden **10, 11** miteinander verschweißt werden, insgesamt V-förmig ausgebildet, wobei die eine Unstetigkeit oder einen Versatz **12** in der Stoßstelle bildende Spitze der V-Form mittig zwischen den beiden Bandkanten **13, 14** liegt.

Beim (Laser-)Schweißvorgang wird von beiden Bandkanten **13, 14** ausgehend bis zu dem Versatz **12** (bis zur Spitze der V-Form) geschweißt. Durch diesen Versatz wird eine bessere Schweißgüte im Bereich der Überlappung der beiden Teil-Schweißnähte **15, 16** erzielt. Der Versatz **12** ist nur so stark, d.h. der Winkel der V-Form ist nur so klein, dass auch an dieser Stelle eine kontrollierte Schweißverbindung der aneinender stoßenden Bandenden **10, 11** entsteht.

Wie in Fig. 3 dargestellt, folgt der Laser beim Verschweißen nicht dem V-förmigen Verlauf der aneinander stoßenden Bandenden, sondern wird von jeder Bandkante 13, 14 ausgehend geradlinig bis zur Bandmitte ausgeführt, wobei die Schweißnaht die V-förmige Stoßstelle überall überdeckt.

Besteht an der Überlappungsstelle der beiden Schweißnähte **15, 16** kein Versatz, so entsteht an den aneinander stoßenden Bandenden zweimal ein Schmelzbad. Dies führt im Überlappungsbereich zu verringerter Schweißgüte. Durch den Versatz fallen die Auswirkungen des zweifachen Schmelzbades auf die Schweißgüte geringer, konsistenter aus.

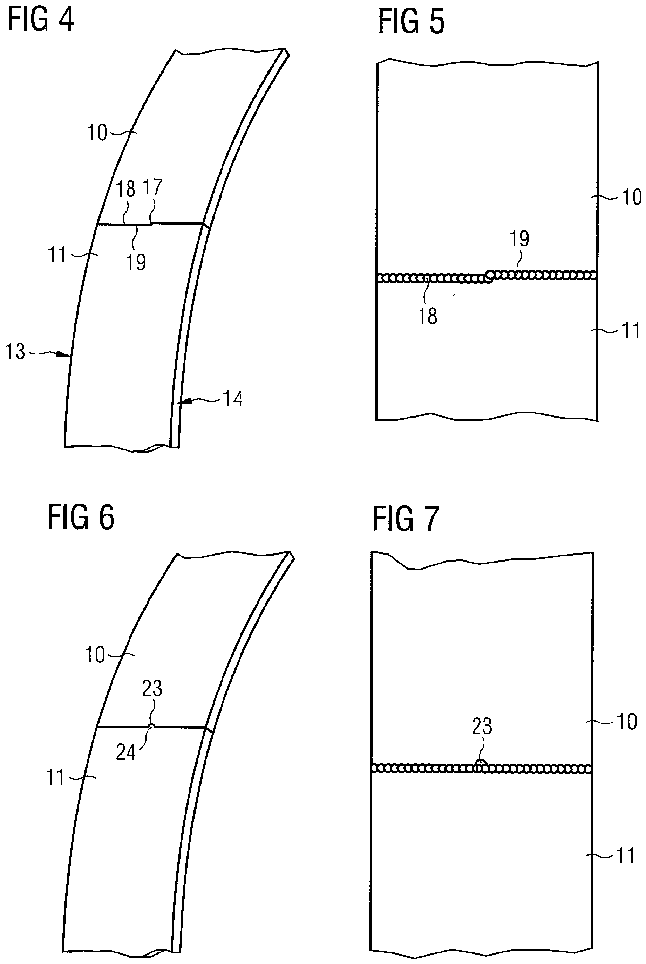

In der alternativen nicht erfindungsgemäßen Gestaltung nach Fig. 4 und 5 weist die Stoßstelle, an der die beiden Bandenden **10, 11** miteinander verschweißt werden, einen Versatz in Form einer in der Bandebene liegenden Stufe **17** auf, an der ein am einen Bandende **10** vorspringender Teil **18** einem zurückspringenden Teil **19** am anderen Bandende **11** gegenübersteht. Die Stufe **17** befindet sich in der Mitte zwischen den beiden Bandkanten **13, 14.**

Die nicht erfindungsgemäße Gestaltung nach Fig. 6 und 7 unterscheidet sich von den vorherigen dadurch, dass der Versatz als in der Bandebene und mittig zwischen den Bandkanten **13, 14** liegende Einbuchtung **23** am einen Bandende **10** ausgebildet ist, in die eine komplementäre Ausbuchtung **24** am anderen Bandende **11** eingreift.

## Patentansprüche

1. Verfahren zum Herstellen eines geschweißten Rings, bei dem ein Band mit dem Ringumfang entsprechender Länge zu einem Ring gebogen und an seinen Enden (10, 11) verschweißt wird,
wobei die Schweißung von beiden Ringseitenkanten bzw. Bandkanten (13, 14) her von außen nach innen erfolgt,
**dadurch gekennzeichnet, dass**
die Stoßstelle der miteinander zu verschweißenden Bandenden (10, 11) einen in der Bandebene liegenden V-förmigen Versatz (12) in Umfangsrichtung des Rings aufweist,
die den Versatz (12) in der Stoßstelle bildende Spitze der V-Form mittig zwischen den beiden Ringseitenkanten (13, 14) liegt, und
die Schweißung nicht dem V-förmigen Verlauf der aneinander stoßenden Bandenden (10, 11) folgt, sondern von jeder der Ringseitenkanten (13, 14) ausgehend geradlinig bis zur Bandmitte ausgeführt wird, wobei die Schweißnaht die V-förmige Stoßstelle überall überdeckt.

## Claims

1. A method of producing a welded ring wherein a band of a length corresponding to the circumference of the ring is bent to form a ring and welded at its ends (10, 11),
the welding being performed from both lateral edges (13, 14) of the ring or band from the outside inwards,
**characterised in that**
the butt of the band ends (10, 11) to be welded together has a V-shaped offset (12) in the circumferential direction of the ring,
the peak of the offset (12) in the butt is formed midway between both lateral edges (13, 14), and
the welding does not follow the V-shaped line of the abutting band ends (10, 11) but is performed, starting from each lateral edge (13, 14), in a straight line to the middle of the band such that the weld seam everywhere covers the V-shaped butt.

## Revendications

1. Procédé de production d'une bague soudée dans lequel une bande d'une longueur correspondant à la circonférence de la bague est courbée pour former une bague et soudée à ses extrémités (10, 11),
le soudage étant exécuté depuis les deux bords latéraux (13, 14) de la bague ou de la bande de l'extérieur vers l'intérieur,
**caractérisé en ce que**
l'aboutement des extrémités (10, 11) de bande devant être soudées ensemble a un décalage (12) en forme de V dans le sens circonférentiel de la bague,
le pic du décalage (12) dans l'aboutement est formé à mi-chemin entre les deux bords latéraux (13, 14), et
le soudage ne suit pas la ligne en forme de V des extrémités (10, 11) de bande aboutées mais est exécuté, en partant de chaque bord latéral (13, 14), en une ligne droite jusqu'au milieu de la bande de telle sorte que le cordon de soudure recouvre partout l'aboutement en forme de V.
